**Europäisches Patentamt**

**European Patent Office**

**Office européen des brevets**

(19)

(11) Veröffentlichungsnummer: **0 324 710 B1**

# EUROPÄISCHE PATENTSCHRIFT

(12)

(45) Veröffentlichungstag der Patentschrift:
11.09.91 Patentblatt 91/37

(51) Int. Cl.⁵: **E06B 3/66, G09F 13/18**

(21) Anmeldenummer: **89710001.2**

(22) Anmeldetag: **10.01.89**

(54) **Isolierglasscheibe.**

(30) Priorität: **11.01.88 DE 8800207 U**
**04.03.88 DE 8802949 U**

(43) Veröffentlichungstag der Anmeldung:
**19.07.89 Patentblatt 89/29**

(45) Bekanntmachung des Hinweises auf die
Patenterteilung:
**11.09.91 Patentblatt 91/37**

(84) Benannte Vertragsstaaten:
**AT BE CH DE ES FR GB IT LI LU NL SE**

(56) Entgegenhaltungen:
**BE-A- 498 065**

(56) Entgegenhaltungen:
**DE-A- 2 540 630**
**DE-U- 8 800 207**
**DE-U- 8 802 949**
**FR-A- 2 408 093**
**GB-A- 1 092 203**

(73) Patentinhaber: **Funke, Bodo**
**Am Lieberg 13**
**W-5372 Schleiden-Gemünd (DE)**

(72) Erfinder: **Funke, Bodo**
**Am Lieberg 13**
**W-5372 Schleiden-Gemünd (DE)**

(74) Vertreter: **Freischem, Werner, Dipl.-Ing.**
**An Gross St. Martin 2**
**W-5000 Köln 1 (DE)**

Jouve, 18, rue Saint-Denis, 75001 PARIS

## Beschreibung

Die Erfindung geht aus von einer Isolierglasscheibe, deren Glasscheiben mittels an den Rändern angeordneter Abstandsprofilen parallel zueinander auf Abstand gehalten und deren Innenraum durch eine an den Rändern angebrachte Dichtmasse abgedichtet ist. Derartige Isolierglasscheiben sind allgemein bekannt und werden für Fenster, Schaufenster, Türen und Vitrinen benutzt (DE-A-2540630).

Der vorliegenden Erfindung liegt die Aufgabe zugrunde, den Innenraum dieser Isolierglasscheiben zu beleuchten bzw. zum Leuchten zu bringen.

Diese Aufgabe wird erfindungsgemäß dadurch gelöst, daß zur auswechselbaren Aufnahme einer langgestreckten Leuchte im geringen Abstand von mindestens einem Rand der Isolierglasscheibe eine bis zu den rechtwinklig zu diesem Rand verlaufenden Außenkante der Isolierglasscheibe sich erstreckende, an beiden Enden offene Röhre angeordnet ist, die zumindest in dem dem Innenraum der Isolierglasscheibe zugewandten Bereich lichtdurchlässig ist und deren Enden in die Dichtungsmasse eingebettet sind.

In dieser Röhre der erfindungsgemäßen Isolierglasscheibe kann eine langgestreckte Leuchte, insbesondere eine Leuchtstoffröhre, eingesetzt werden, so daß mit Hilfe dieser Lichtquelle der Innenraum der Isolierglasscheibe ausgeleuchtet werden kann. Auf diese Weise kann an Fenstern und Türen eine Beleuchtung angebracht werden, die bei abgeschalteter Leuchte nicht sichtbar ist. Werden bei der Herstellung der Isolierglasscheibe in deren abgedichtetem Innenraum Ziergitter oder dergleichen eingebracht, so werden diese von einem oder mehreren Rändern der Isolierglasscheibe her beleuchtet.

Durch die Anordnung einer mit Mustern, Schriftzeichen, Symbolen oder dergleichen versehenen Scheibe aus durchsichtigem Material zwischen den Glasscheiben der Isolierglasscheibe lassen sich, beispielsweise zu Reklamezwecken, eindrucksvolle Leuchtschilder herstellen. Die langgestreckte Leuchte innerhalb der Röhre projiziert ihr Licht in die aus klar durchsichtigem Werkstoff bestehende Scheibe, so daß dem Betrachter die als Gravur oder als Farbauftrag aufgebrachten Muster oder Symbole hell aufleuchten. Zweckmäßigerweise besteht die zwischen den Glasscheiben der Isolierglasscheibe angeordnete Scheibe aus Kunststoff, insbesondere aus Acrylglas, und die Muster oder Schriftzeichen sind in Form einer tiefen Gravur auf diese Scheibe aufgebracht. Das von der Leuchtstoffröhre ausgehende und in die Zwischenscheibe einfallende Licht leuchtet an den Gravuren hell auf, so daß brillant leuchtende Reklameschilder, Praxisschilder, Namensschilder oder dergleichen erstellt werden können.

Es hat sich gezeigt, daß auch Muster, Schriftzeichen und dergleichen, die im Siebdruck auf eine Kunststoffscheibe aufgebracht sind, bei dieser Anordnung hell aufleuchten. Die Brillanz wird dadurch erhöht, daß Farben benutzt werden, die nicht deckend sind und die geringfügig in die Oberfläche der Kunststoff-Zwischenscheibe hineindiffundieren.

Weil die so gebildeten Leuchtschilder innerhalb der Isolierglasscheiben integriert sind, sind sie gegen Witterungseinflüsse geschützt und können nicht verstauben. Die in die Röhre der Isolierglasscheibe eingesetzte Lichtquelle, insbesondere Leuchtstoffröhre, strahlt ihr Licht zwischen die beiden Glasscheiben der Isolierglasscheibe aus und wird von den Innenseiten der Abstandprofile reflektiert, so daß diese Innenseiten der Abstandprofile hell aufleuchten und einen leuchtenden Rahmen bilden. Ferner leuchtet jedes Muster, jede Gravur und jedes Gitter auf, das sich zwischen den Glasscheiben der Isolierglasscheibe befindet.

Weitere Merkmale der Erfindung ergeben sich aus den Schutzansprüchen.

In der folgenden Beschreibung werden Ausführungsbeispiele der Isolierglasscheibe nach der Erfindung unter Bezugnahme auf die Zeichnungen näher erläutert. Die Zeichnungen zeigen in

Fig. 1     eine Draufsicht auf ein Teil einer Isolierglasscheibe,
Fig. 2     eine Ansicht nach der Schnittlinie II-II in Fig. 1,
Fig. 3     eine Schnittansicht einer als Abstandsprofil dienenden Röhre zur Aufnahme der Leuchte,
Fig. 4     eine Ansicht nach der Schnittlinie IV-IV in Fig. 3,
Fig. 5     eine Schnittansicht entsprechend Fig. 4 mit parallel zur Röhre verlaufendem Abstandsprofil,
Fig. 6     eine Ansicht nach der Schnittlinie VI-VI in Fig. 7 und
Fig. 7     eine Draufsicht auf eine Isolierglasscheibe gemäß Fig. 6 mit zwei vertikalen Röhren zur Aufnahme von Leuchten.

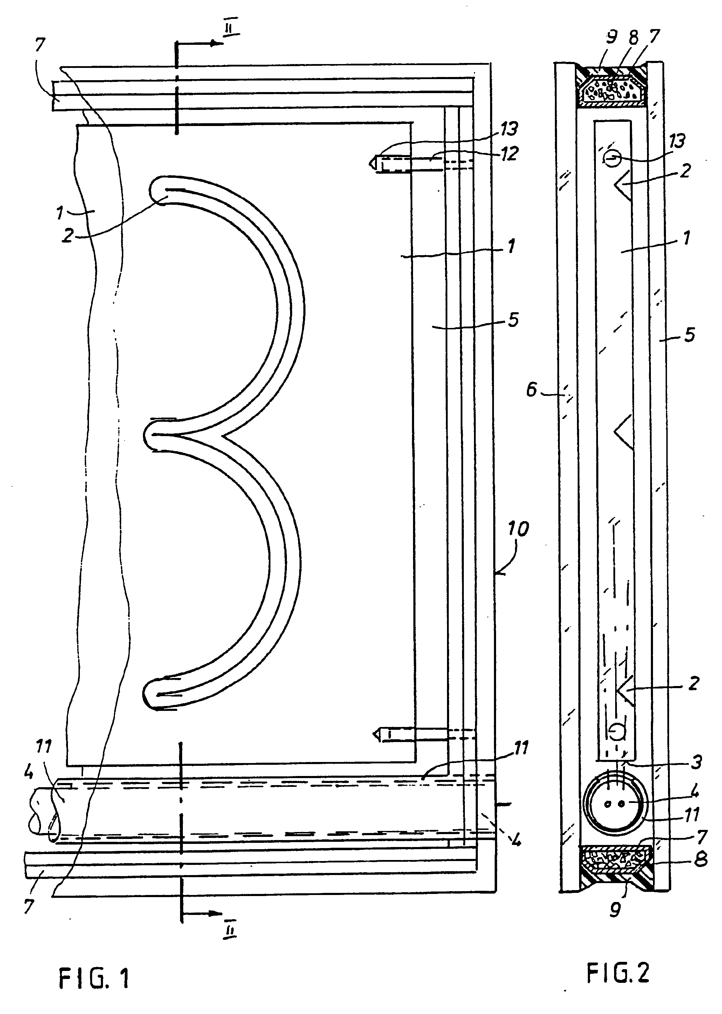

Die Isolierglasscheibe nach den Fig. 1 und 2 weist eine zwischen den Glasscheiben 5 und 6 durchsichtige Zwischenscheibe 1 auf, in welche durch Gravur Schriftzeichen 2 eingearbeitet sind, welche Zahlen, Namen oder dergleichen bilden. Längs der unteren Kante 3 der Zwischenscheibe 1 ist eine langgestreckte Leuchte 4 angeordnet, deren Licht in die Zwischenscheibe 1 eingeleitet wird mit der Wirkung, daß die Gravur 2 hell aufleuchtet. Dieses helle Aufleuchten ist besonders stark, wenn der Querschnitt der Gravur dreieckig ist und die Flanken der eingravierten Rille in einem Winkel von 90° zueinander und in einem Winkel von 45° zur Oberfläche der Zwischenscheibe stehen. Es können auch an zwei, drei oder vier Kanten der Zwischenscheibe 1 langgestreckte Leuchten, insbesondere Leuchtstoffröhren, angeordnet sein, welche beispielsweise unterschiedliches farbiges Licht abstrahlen, so daß die Gravur 2 in unterschiedlichen Farben aufleuchten kann, wenn die Leuchten abwechselnd leuchten.

Die Glasscheiben 5,6 werden von an den Rändern der Isolierglasscheibe angeordneten Abstandsprofilen 7 parallel zueinander auf Abstand gehalten. In den Abstandsprofilen 7 befindet sich in bekannter Weise ein hygroskopisches Mittel 8, zum Beispiel Silica-Gel, welches die Restfeuchte innerhalb der hermetisch abgedichteten Isolierglasscheibe aufnimmt. Die Abdichtung erfolgt mittels einer Dichtmasse 8, die an den Außenseiten der Abstandsprofile 7 und zwischen den über die Abstandsprofile 7 vorragenden Rändern der Glasscheiben 5,6 angebracht ist. Die Dichtmasse besteht aus einem elastischen Kunststoff, beispielsweise Polyurethan oder Butylkautschuk.

Damit bei der Isolierglasscheibe die langgestreckte Leuchte 4 ausgewechselt werden kann, ohne die Abdichtung der Isolierglasscheibe zu verletzen, ist dort eine die Leuchte 4 umgebende Röhre 11 vorgesehen, die zumindest in dem der Kante 3 zugewandten Bereich lichtdurchlässig ist und deren beide Enden bis zu den Außenkanten 10 der Isolierglasscheibe reichen und von Dichtmasse 9 umgeben sind, so daß sich die Röhre 11 innerhalb der völlig abgedichteten Isolierglasscheibe befindet, während das Innere der Röhre 11 mit der Atmosphäre in Verbindung steht. Die langgestreckte Leuchte 4 kann also ohne weiteres leicht und schnell ausgewechselt werden, so daß auch Leuchten mit kürzerer Brenndauer eingesetzt werden können.

Die Röhre 11 kann einen Durchmesser haben, der genau der Breite des Abstandsprofils 7 entspricht. In diesem Falle kann die Röhre 11 an dem Rand, an dem sie angeordnet ist, das Abstandsprofil 7 ersetzen. Dies hat den Vorteil, daß die Leuchte 4 völlig im Rahmen hinter einer Glasleiste verschwinden kann, in den die Isolierglasscheibe eingesetzt wird.

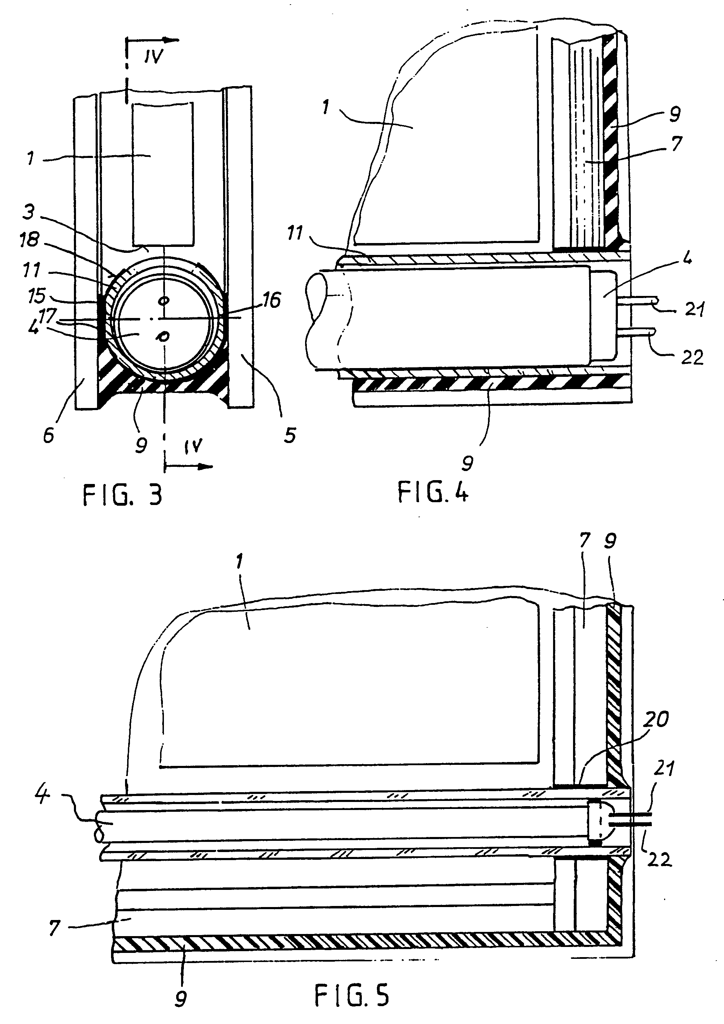

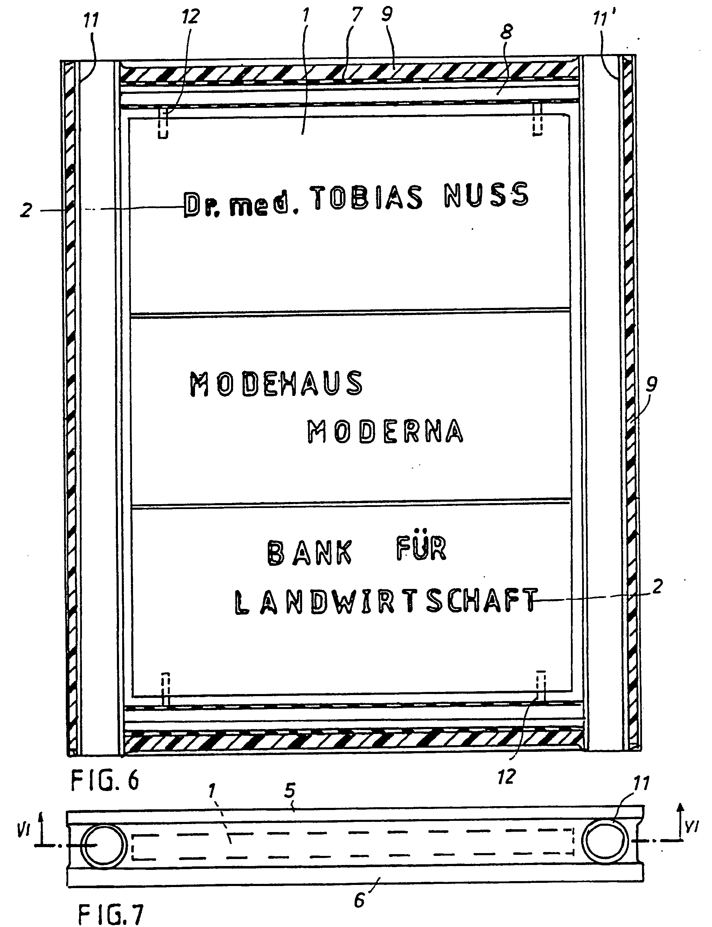

Wie die Fig. 3 und 4 zeigen, kann die Röhre 11, wenn sie auch als Abstandsprofil dienen soll, an den Seiten abgeflacht sein. Mit diesen Abflachungen 15,16 wird unter Zwischenlage eines Dicht- und Klebebandes 17 die Röhre 11 an die Glasscheiben 5,6 angelegt. Diese Abflachungen 15 und 16 erleichtern die Montage der Isolierglasscheibe, insbesondere, wenn die Röhre 11 nur in dem an die Kante 3 der Kunststoffscheibe 1 angrenzenden Bereich lichtdurchlässig ist und im übrigen Bereich mit einer lichtundurchlässigen Schicht, insbesondere einer nach innenlichtreflektierenden Schicht 18, versehen ist. Die Abflachungen 15 und 16 können, wie auch die entsprechenden Seitenflächen der Abstandsprofile 7, mit kleinen längsverlaufenden Rippen versehen sein, wodurch die Dicht- und Haftwirkung gesteigert wird.

Bei der Ausführungsform nach den Fig. 6 und 7 ist die Zwischenscheibe 1 in drei Firmen- oder Praxisschilder unterteilt. Die aus Kunststoff bestehende Zwischenscheibe 1 wird von zwei Leuchten bestrahlt, die an den Seitenrändern der Isolierglasscheibe in Röhren 11, 11' angeordnet sind, die dort gleichzeitig als Abstandsprofile dienen.

Bei dem Ausführungsbeispiel nach Fig. 5 ist die Röhre 11 parallel zum Abstandsprofil 7 in die Isolierglasscheibe eingesetzt. Die Enden der Röhre 11 sind durch die rechtwinklig dazu verlaufenden Abstandsprofile 7 hindurchgeführt. Zur Montagevereinfachung und um Klappergeräusche, z.B. an Türen, zu vermeiden, sind die Enden der Röhre 11 in elastischen Fassungen 20 gehalten, die in Ausnehmungen der Abstandsprofile 7 eingesetzt sind.

Auch die Leuchtstoffröhre 4 ist an ihren Enden über elastische Fassungen 20 in der Röhre 11 gehalten.

Die Isolierglasscheibe nach der Erfindung kann als Innenreklame und als Außenreklame Anwendung finden. Diese Isolierglasscheibe kann auch als Schaufensterscheibe, als Türscheibe oder als Wand einer Truhe verwendet werden.

**Bezugszeichenliste :**

| | |
|---|---|
| 1 | durchsichtige Zwischenscheibe |
| 2 | Schriftzeichen |
| 3 | Kante |
| 4, 4' | langgestreckte Leuchte |
| 4" | Leuchtstoffröhre |
| 5 | Glasscheibe |
| 6 | Glasscheibe |
| 7 | Abstandsprofil |
| 8 | hygroskopisches Mittel |
| 9 | Dichtmasse |
| 10 | Außenkante |
| 11 | Röhre |

| 12 | Tragstift |
|----|-----------|
| 13 | Bohrung |
| 15 | Abflachung |
| 16 | Abflachung |
| 17 | Dicht- und Klebeband |
| 18 | Schicht |
| 20 | elastische Fassung |
| 21 | Kontaktstift |
| 22 | Kontaktstift |

## Patentansprüche

1. Isolierglasscheibe, deren Glasscheiben (5, 6) mittels an den Rändern angeordneter Abstandsprofilen (7) parallel zueinander auf Abstand gehalten und deren Innenraum durch eine an den Rändern angebrachte Dichtmasse (9) abgedichtet ist, **dadurch gekennzeichnet**, daß zur auswechselbaren Aufnahme einer langgestreckten Leuchte (4) im geringen Abstand von mindestens einem Rand der Isolierglasscheibe eine bis zu den rechtwinklig zu diesem Rand verlaufenden Außenkanten (9, 10) der Isolierglasscheibe sich erstreckende, an beiden Enden offene Röhre (11) angeordnet ist, die zumindest in dem dem Innenraum der Isolierglasscheibe zugewandten Bereich lichtdurchlässig ist, und deren Enden in die Dichtmasse (9) eingebettet sind.

2. Isolierglasscheibe nach Anspruch 1, dadurch gekennzeichnet, daß die Röhre (11) aus Glas besteht.

3. Isolierglasscheibe nach Anspruch 2, dadurch gekennzeichnet, daß die Röhre (11) mit Ausnahme des lichtdurchlässigen Bereiches mit einer das Licht nach innen reflektierenden Schicht (18) versehen ist.

4. Isolierglasscheibe nach einem der Ansprüche 1 bis 3, dadurch gekennzeichnet, daß der Außendurchmesser der Röhre (11) genau der Breite der Abstandsprofile (7) entspricht und an mindestens einem Rand der Isolierglasscheibe das Abstandsprofil bildet.

5. Isolierglasscheibe nach Anspruch 4, dadurch gekennzeichnet, daß die Röhre (11) an zwei Seiten zueinander parallele Abflachungen (15, 16) aufweist, deren Abstand voneinander der Breite des Abstandsprofils (7) entspricht.

6. Isolierglasscheibe nach einem der Ansprüche 1 bis 5, dadurch gekennzeichnet, daß zwischen den Glasscheiben (5, 6) der Isolierglasscheibe eine aus durchsichtigem Material bestehende Zwischenscheibe (1) angeordnet ist, die mit Mustern, Zeichen oder Symbolen (2) versehen ist.

7. Isolierglasscheibe nach Anspruch 6, dadurch gekennzeichnet, daß die durchsichtige Zwischenscheibe (1) aus Kunststoff, insbesondere aus Acrylglas bzw. Polymethacrylaten, besteht.

8. Isolierglasscheibe nach Anspruch 6 oder 7, dadurch gekennzeichnet, daß die Muster, Zeichen oder Symbole (2) in die Zwischenscheibe (1) eingraviert sind.

9. Isolierglasscheibe nach Anspruch 6 oder 7, dadurch gekennzeichnet, daß die Muster, Zeichen oder Symbole (2) mit Farbe auf die Zwischenscheibe (1) aus durchsichtigem Werkstoff aufgebracht sind.

10. Isolierglasscheibe nach Anspruch 9, dadurch gekennzeichnet, daß die Muster, Zeichen oder Symbole (2) mit einer in die Oberfläche der Zwischenscheibe (1) hineindiffundierenden Farbe aufgebracht sind.

11. Isolierglasscheibe nach Anspruch 10, dadurch gekennzeichnet, daß die Farbe im Siebdruckverfahren aufgebracht ist.

12. Isolierglasscheibe nach einem der Ansprüche 1 bis 5, dadurch gekennzeichnet, daß zwischen ihren Glasscheiben (5, 6) ein Ziergitter angeordnet ist.

## Claims

1. A double glazing pane in which the glass panes (5, 6) are held parallel to each other at a spacing by means of spacer members (7) arranged at the edges, and the interior of which is sealed off by a sealing material (9) provided at the edges, characterised in that for replaceably accommodating an elongate lamp (4) at a small spacing from at least one edge of the double glazing pane there is a tube (11) which is open at both ends and which extends as far as the outside edges (9, 10) of the double glazing pane, which edges extend at a right angle to said at least one edge of the double glazing pane, the tube being translucent at least in the region towards the interior of the double glazing pane and the ends of the tube being embedded in the sealing material (9).

2. A double glazing pane according to claim 1 characterised in that the tube (11) comprises glass.

3. A double glazing pane according to claim 2 characterised in that, with the exception of the translucent region, the tube (11) is provided with a layer (18) for reflecting the light inwardly.

4. A double glazing pane according to one of claims 1 to 3 characterised in that the outside diameter of the tube (11) precisely corresponds to the width of the spacer members (7) and forms the spacer member at at least one edge of the double glazing pane.

5. A double glazing pane according to claim 4 characterised in that the tube (11) is provided at two sides with mutually parallel flat portions (15, 16), the spacing between which corresponds to the width of the spacer member (7).

6. A double glazing pane according to one of claims 1 to 5 characterised in that disposed between the glass panes (5, 6) of the double glazing pane is an intermediate pane (1) which comprises transparent material and which is provided with patterns, characters or symbols (2).

7. A double glazing pane according to claim 6 characterised in that the transparent intermediate pane (1) comprises plastics material, in particular acrylic glass or polymethacrylates.

8. A double glazing pane according to claim 6 or claim 7 characterised in that the patterns, characters or symbols (2) are engraved in the intermediate pane.

9. A double glazing pane according to claim 6 or claim 7 characterised in that the patterns, characters or symbols (2) are applied with dye to the intermediate pane (1) of transparent material.

10. A double glazing pane according to claim 9 characterised in that the patterns, characters or symbols (2) are applied with a dye which diffuses into the surface of the intermediate pane (1).

11. A double glazing pane according to claim 10 characterised in that the dye is applied by a screen printing process.

12. A double glazing pane according to one of claims 1 to 5 characterised in that an ornamental grid is arranged between its glass panes (5, 6).

## Revendications

1. Vitrage isolant, dont les vitres (5, 6) sont maintenues parallèles et espacées au moyen d'entretoises (7) disposées sur les bords, et dont l'espace intérieur est étanché par un matériau d'étanchéité (9) appliqué sur la périphérie, caractérisé en ce qu'est prévu, pour le logement et le remplacement d'un éclairage de forme très allongée (4), un tube (11) ouvert aux deux extrémités, situé à faible distance d'au moins un bord du vitrage isolant et joignant les deux bords externes (9, 10) du vitrage isolant qui sont perpendiculaires audit bord, ledit tube étant translucide au moins dans sa région orientée vers l'espace intérieur du vitrage isolant, et ses extrémités étant encastrées dans le matériau d'étanchéité (9).

2. Vitrage isolant selon la revendication 1, caractérisé en ce que le tube (11) est en verre.

3. Vitrage isolant selon la revendication 2, caractérisé en ce que le tube (11) est doté d'un revêtement (18) qui réfléchit la lumière vers l'intérieur, excepté au niveau de la région translucide.

4. Vitrage isolant selon l'une des revendications 1 à 3, caractérisé en ce que le diamètre externe du tube (11) correspond exactement à la largeur des entretoises (7) et fait office d'entretoise sur au moins un bord du vitrage isolant.

5. Vitrage isolant selon la revendication 4, caractérisé en ce que le tube (11) présente sur deux côtés des méplats parallèles (15, 16), dont l'espacement correspond à la largeur de l'entretoise (7).

6. Vitrage isolant selon l'une des revendications 1 à 5, caractérisé en ce qu'entre les vitres (5, 6) du vitrage isolant est agencée une vitre intermédiaire (1) en matériau transparent, dotée de dessins, signes ou symboles (2).

7. Vitrage isolant selon la revendication 6, caractérisé en ce que la vitre intermédiaire (1) transparente est en matière plastique, en particulier en plexiglas ; ou polyméthacrylates.

8. Vitrage isolant selon la revendication 6 ou 7, caractérisé en ce que les dessins, signes ou symboles (2) sont gravés dans la vitre intermédiaire (1).

9. Vitrage isolant selon la revendication 6 ou 7, caractérisé en ce que les dessins, signes ou symboles (2) sont appliqués en couleur sur la vitre intermédiaire (1) en matériau transparent.

10. Vitrage isolant selon la revendication 9, caractérisé en ce que les dessins, signes ou symboles (2) sont appliqués en une couleur qui diffuse à travers la surface de la vitre intermédiaire (1).

11. Vitrage isolant selon la revendication 10, caractérisé en ce que la couleur est appliquée par sérigraphie.

12. Vitrage isolant selon l'une des revendications 1 à 5, caractérisé en ce qu'un grillage de décoration est agencé entre les vitres (5, 6).

FIG. 1

FIG. 2

FIG. 3

FIG. 4

FIG. 5

Dr. med. TOBIAS NUSS

MODEHAUS

MODERNA

BANK FÜR

LANDWIRTSCHAFT

FIG. 6

FIG. 7